# EUROPÄISCHE PATENTANMELDUNG

(11) **EP 4 403 317 A1**
(43) Veröffentlichungstag der Anmeldung: **24.07.2024**
(21) Anmeldenummer: 23152868.8
(22) Anmeldetag: 23.01.2023
(51) Int. Cl.: B25J 9/16, B25J 19/00, B25J 19/02

(54) **VERFAHREN ZUR STEUERUNG EINES BAUROBOTERS UND BAUROBOTER**

(71) Anmelder: Hilti Aktiengesellschaft, 9494 Schaan (LI)
(72) Erfinder: Schmidt, Peer, 88131 Lindau (DE); Bralla, Dario, 9470 Buchs (CH)
(74) Vertreter: Hilti Aktiengesellschaft Corporate Intellectual Property

(57) **Zusammenfassung**

Die Erfindung betrifft ein **Verfahren (1000) zur Steuerung eines Bauroboters (10),** wobei der Bauroboter (10) gesteuert wird, mit einem an einem Manipulator des Bauroboters (10) befindlichen Werkzeug (18) zumindest eine Arbeitsposition (20) auf einem Gebäudeelement (12), wobei die Arbeitsposition (20) mit Hilfe wenigstens eines Linienlichtstrahls (52) markiert wird, anzufahren. Sie ist dadurch gekennzeichnet, dass der Bauroboter (10) den Manipulator und / oder das Werkzeug (18) in Abhängigkeit von einer Position eines Auftreffpunkts (AP1, AP2, AP3) des Linienlichtstrahls (52) auf dem Bauroboter (10) bewegt.

## Beschreibung

Die Erfindung betrifft ein Verfahren zur Steuerung eines Bauroboters, wobei der Bauroboter gesteuert wird, mit einem an einem Manipulator des Bauroboters befindlichen Werkzeug zumindest eine Arbeitsposition auf einem Gebäudeelement anzufahren, wobei die Arbeitsposition mit Hilfe wenigstens eines Linienlichtstrahls markiert wird. An der Arbeitsposition kann dann der Bauroboter eine Bauarbeit ausführen.

Dazu kann zunächst das durch den Linienlichtstrahl auf dem Gebäudeelement gezeichnete Lichtbild aufgenommen und mittels Bildverarbeitung ausgewertet werden, um eine Position der markierten Arbeitsposition zu ermitteln. Dann können eine Bauroboter-Position und eine Bauroboter-Lage des Bauroboters ermittelt werden. Diese verschiedenen Daten können zusammengeführt werden, um einen Weg zu ermitteln, auf dem das Werkzeug die Arbeitsposition anfahren kann.

Dieses Verfahren scheitert jedoch in vielen Fällen. Häufig befinden sich an Gebäudeelementen wie beispielsweise Gebäudedecken bereits Installationselemente oder dergleichen. Diese können die Sichtlinie zwischen dem Bauroboter und einer auf dem Gebäudeelement befindlichen Arbeitsposition unterbrechen, sodass der Bauroboter schon das Lichtbild der markierten Arbeitsposition nicht aufnehmen kann. Derartige Störobjekte, beispielsweise die genannten Installationselemente, können auch zu Fehlermittlungen der Position der Arbeitsposition führen. Beispielsweise kann es zu Verwechslungen zwischen einem auf ein Störobjekt treffenden Teil des Linienlichtstrahls und einem tatsächlich die Arbeitsposition auf dem Gebäudeelement markierenden Teil des Linienlichtstrahls kommen. Unterschiedliche Höhenlagen dieser verschiedenen Teile können zu einem für den Bauroboter scheinbaren Versatz der Arbeitsposition führen.

Wird die Arbeitsposition jedoch nicht korrekt ermittelt, kann dies dazu führen, dass Bauarbeiten an einer falschen Position ausgeführt werden. So kann es beispielsweise bei Bohrarbeiten dazu kommen, dass Löcher an ungeeigneten Positionen gebohrt werden. Bei Meißelarbeiten kann dies zu einer ungewollten Zerstörung des Gebäudeelements oder eines anderen, in der Nähe befindlichen Objekts führen.

Aufgabe der vorliegenden Erfindung ist es daher, ein Verfahren bereitzustellen, durch das der Bauroboter in die Lage versetzt wird, mit dem Werkzeug eine durch einen Linienlichtstrahl markierte Arbeitsposition auf einem Gebäudeelement zuverlässig anzufahren. Weiter ist eine Aufgabe der vorliegenden Erfindung, einen Bauroboter bereitzustellen, mit dessen Hilfe eine Bauarbeit an einer durch einen Linienlichtstrahl markierten Arbeitsposition zuverlässig ausführbar ist.

Gelöst wird die Aufgabe durch ein **Verfahren zur Steuerung eines Bauroboters**, wobei der Bauroboter gesteuert wird, mit einem an einem Manipulator des Bauroboters befindlichen Werkzeug zumindest eine Arbeitsposition auf einem Gebäudeelement anzufahren, wobei die Arbeitsposition mit Hilfe wenigstens eines Linienlichtstrahls markiert wird, wobei der Bauroboter den Manipulator und / oder das Werkzeug in Abhängigkeit von einer Position eines Auftreffpunktes des Linienlichtstrahls auf dem Bauroboter bewegt.

Der Erfindung liegt dabei unter anderem der überraschende Gedanke zugrunde, dass der Linienlichtstrahl, wenn er auf den Bauroboter trifft, selbst einen geradlinigen Weg vom Bauroboter zur Arbeitsposition beschreibt. Daten über einen Weg zur Arbeitsposition lassen sich somit nicht nur dadurch erhalten, dass die Arbeitsposition auf dem Gebäudeelement selbst untersucht wird, sondern auch dadurch, dass der Linienlichtstrahl, insbesondere abseits des Gebäudeelements, untersucht wird. Störeffekte wie die vorangehend beschriebene Unterbrechung der Sichtlinie, ein scheinbarer Versatz aufgrund von Störobjekten etc. können vermieden oder zumindest vermindert werden, wenn der Linienlichtstrahl nicht im Bereich des Gebäudeelements, sondern in direkter Nähe zum Bauroboter, insbesondere bei Auftreffen auf den Bauroboter, untersucht wird. Dadurch kann durch Erfassen der Position wenigstens eines Auftreffpunktes auf dem Bauroboter ein Weg zur Arbeitsposition mit sehr hoher Zuverlässigkeit ermittelt werden.

So ist denkbar, dass der Bauroboter detektiert, dass der Linienlichtstrahl am Werkzeug vorbei strahlt, d. h., dass das Werkzeug in seiner aktuellen Position jedenfalls die Arbeitsposition nicht erreicht. Dann kann der Bauroboter eingerichtet sein, eine Korrekturbewegung durchzuführen, die das Werkzeug wieder zumindest mit hinreichender Genauigkeit, entlang des Linienlichtstrahls ausrichtet.

Durch schrittweise Bewegungen kann so das Werkzeug entlang dem Linienlichtstrahl geführt werden, bis es schlussendlich die Arbeitsposition erreicht.

Dabei ist in der Regel zumindest bekannt, in welcher Richtung die Arbeitsposition zu erwarten ist. Von einer Arbeitsposition an einer Gebäudedecke ist beispielsweise bekannt, dass diese sich oberhalb des auf einem Gebäudeboden befindlichen Bauroboters befinden muss. Hieraus lässt sich somit ableiten, in welcher Richtung dem Linienlichtstrahl zu folgen ist.

Das Verfahren kann bei unterschiedlichen Arten von Linienlichtstrahlen einsetzbar sein. So kann der Linienlichtstrahl ein Dauerlichtstrahl sein. Denkbar ist auch, dass der Linienlichtstrahl einem oder mehreren wandernden Lichtpunkten entspricht, wie sie beispielsweise durch einen Rotationslaser erzeugt werden. Alternativ oder ergänzend kann es sich um gepulstes Licht handeln.

Vorzugsweise kann das Verfahren bei Licht im infraroten, sichtbaren oder ultravioletten Bereich verwendet werden. Denkbar ist alternativ oder ergänzend jedoch auch, das Verfahren bei elektromagnetischer Strahlung anderer Frequenzbereiche, beispielsweise Mikrowellen, einzusetzen. Vorzugsweise können dazu auf den jeweiligen Frequenzbereich angepasste Lichtsensoren, beispielsweise Infrarotsensoren, für sichtbares Licht geeignete Lichtsensoren, oder UV-Sensoren, eingesetzt werden.

Die Position des Auftreffpunkts kann insbesondere mit Hilfe wenigstens eines Zeilenlichtsensors oder eines Flächenlichtsensors bestimmt werden. Durch einen solchen Lichtsensor lässt sich ein länglicher Bereich bzw. ein flächiger Bereich entlang des Bauroboters hinsichtlich eines Auftreffens des Linienlichtstrahls überwachen, sodass sich der Linienlichtstrahl leichter auffinden lässt. Der Zeilenlichtsensor kann eine Breite von beispielsweise wenigstens 5 cm, insbesondere von wenigstens 10 cm, aufweisen. Der Flächenlichtsensor kann eine Fläche von beispielsweise wenigstens 5 cm x 5 cm aufweisen. Insbesondere der Zeilenlichtsensor kann ein ausgewogenes Verhältnis von Kosten zu überwachtem Bereich bieten.

Denkbar ist insbesondere, wenigstens zwei Positionen zweier verschiedener Auftreffpunkte des Linienlichtstrahls auf dem Bauroboter zu detektieren. Dies kann bereits mit einem einzelnen Flächenlichtsensor erfolgen. Es können dazu auch mehrere Lichtsensoren, beispielsweise mehrere Zeilenlichtsensoren und / oder Flächenlichtsensoren, die vorzugsweise voneinander beabstandet sind, verwendet werden. Insgesamt kann sich damit die Möglichkeit eröffnen, auch eine Ausrichtung des Linienlichtstrahls zu ermitteln.

Denkbar ist, wenigstens eine Position eines Auftreffpunkts auf dem Manipulator zu detektieren. Dazu kann ein Lichtsensor, beispielsweise ein Zeilenlichtsensor, am Manipulator und / oder am Manipulator angeordnet sein. Dann kann eine gegebenenfalls erforderliche Korrekturbewegung direkt aus der ermittelten Position des Auftreffpunkts abgeleitet werden. Eine zusätzliche Bestimmung einer Relativposition des Manipulators relativ zu einer Basis, beispielsweise einer Fahrplattform, des Bauroboters, kann sich somit erübrigen.

Mit dem Linienlichtstrahl können auch mehrere Arbeitspositionen markiert sein. Beispielsweise kann eine Bauaufgabe darin bestehen, mehrere Bauarbeiten entlang des Linienlichtstrahls in konstanten Abständen auf dem Gebäudeelement auszuführen. Beispielsweise kann eine Bauaufgabe darin bestehen, entlang des Linienlichtstrahls in das Gebäudeelement Löcher mit einem vorgegebenen Abstand zueinander zu bohren.

Für einen solchen Fall kann das Verfahren besonders geeignet sein, da es bereits vom Grundsatz her ermöglicht, dem Verlauf des Linienlichtstrahls zu folgen.

Um beispielsweise die Abstände zwischen den einzelnen Bauarbeiten bzw. Arbeitspositionen kontrollieren zu können, kann zusätzlich wenigstens eine zweite Koordinate, beispielsweise eine Distanz zu dem Gebäudeelement und / oder zu einem zweiten Gebäudeelement gemessen werden.

Der für das Verfahren verwendete Bauroboter kann eine Hubvorrichtung aufweisen. Die Hubvorrichtung kann Teil des Manipulators sein.

Bei einem Bauroboter, der zur Ausführung von Bauarbeiten an einer Gebäudedecke eingerichtet ist, kann es genügen, dass der Manipulator, insbesondere die Hubvorrichtung, lediglich einen Freiheitsgrad aufweist. Die Hubvorrichtung kann beispielsweise längenveränderlich sein. Sie kann teleskopierbar sein. Durch eine geringe Anzahl an Freiheitsgraden lassen sich Herstellungskosten einsparen. Auch kann der Manipulator für besonders hohe Lasten ausgelegt sein.

Werden Positionen von wenigstens zwei verschiedenen Auftreffpunkten ermittelt, lässt sich der Verlauf des Linienlichtstrahls ermitteln.

Dieser Verlauf ist, zumindest im freien Raum, ebenfalls geradlinig. Somit kann vorgesehen sein, dass die Hubvorrichtung des Bauroboters abhängig von den Positionen von wenigstens zwei der Auftreffpunkte bewegt wird. Um eine Arbeitsposition an einer Gebäudedecke anzufahren, kann somit zunächst der Verlauf des Linienlichtstrahls ermittelt werden, insbesondere kann ein Neigungswinkel des Linienlichtstrahls beispielsweise relativ zu der Vertikalen und / oder relativ zu einer Oberflächennormalen der Gebäudedecke durch die Arbeitsposition ermittelt werden. Dann kann die Hubvorrichtung schräg gestellt werden, bis sie eine dem ermittelten Neigungswinkel entsprechende Lage einnimmt. Dann kann die Hubvorrichtung geradlinig ausgefahren werden, bis sie die Gebäudedecke erreicht. So kann das am Manipulator befindliche Werkzeug parallel zu zumindest einem Teil des Linienlichtstrahls geführt werden.

Daher kann es insgesamt vorteilhaft sein, die Hubvorrichtung abhängig von Positionen von wenigstens zwei der Auftreffpunkte relativ zu einer Vertikalen und / oder relativ zu einer in der Arbeitsposition fußenden Oberflächennormalen des Gebäudeelements schräg zu stellen.

In den Rahmen der Erfindung fällt des Weiteren ein **Bauroboter** zur Ausführung von Bauarbeiten an einem Gebäudeelement, umfassend eine mobile Plattform, einen Manipulator, an dem ein Werkzeug anordenbar und / oder angeordnet ist, sowie wenigstens einem Lichtsensor, wobei der Bauroboter eingerichtet ist, eine Position eines Auftreffpunktes eines Linienlichtstrahls auf dem Bauroboter mit Hilfe des Lichtsensors zu bestimmen.

Ein solcher Bauroboter bietet die Voraussetzungen, um das vorangehend beschriebene Verfahren umzusetzen.

Vorzugsweise kann der Bauroboter eine Steuerungseinheit aufweisen. Die Steuerungseinheit kann einen Rechner aufweisen. Der Rechner kann einen Prozessor und Speicher, in dem auf dem Prozessor ausführbarer Programmcode abgelegt ist, aufweisen. Der Programmcode kann derart ausgebildet sein, dass bei Ausführung des Programmcodes auf dem Prozessor das Verfahren durch den Bauroboter ausgeführt wird.

Der Bauroboter kann insbesondere eingerichtet sein, Positionen wenigstens zweier verschiedener Auftreffpunkte des Linienlichtstrahls auf dem Bauroboter zu bestimmen.

Der Bauroboter kann wenigstens einen Lichtsensor, insbesondere einen Zeilenlichtsensor und / oder einen Flächenlichtsensor, aufweisen. Vorzugsweise kann er insgesamt wenigstens zwei Lichtsensoren aufweisen. Der Bauroboter kann insbesondere eingerichtet sein, anhand wenigstens zweier Lichtsensoren wenigstens zwei verschiedene Auftreffpunkte des Linienlichtstrahls zu detektieren. Mehrere Lichtsensoren können voneinander beabstandet angeordnet sein. Somit lassen sich Positionen von Auftreffpunkten aus einem besonders großen Bereich ermitteln. Somit kann der Verlauf des Linienlichtstrahls besonders präzise ermittelbar sein.

Der Bauroboter kann wenigstens einen Distanzmesser aufweisen, sodass unabhängig von dem Linienlichtstrahl weitere Daten zur Position der Arbeitsposition gewonnen werden können.

Denkbar ist auch, dass der Bauroboter eingerichtet ist, das vorangehend beschriebene Verfahren auszuführen. Dazu kann er eingerichtet sein, Bildaufnahmen des Lichtbildes aufzunehmen und auszuwerten. Hierdurch gewonnene Daten können zur Fehlerkompensation genutzt werden, um die Position der Arbeitsposition noch präziser und gegebenenfalls noch zuverlässiger bestimmen zu können.

Der Bauroboter kann eingerichtet sein, entlang des Linienlichtstrahls an einer Oberfläche des Gebäudeelements Bauarbeiten, insbesondere gleiche Bauarbeiten, an mehreren, voneinander gleich beabstandeten Arbeitsposition durchzuführen.

Der Bauroboter kann einen Distanzmesser, beispielsweise einen Laserdistanzmesser, aufweisen. Der Distanzmesser kann horizontal angeordnet und / oder ausgerichtet sein. Der Distanzmesser kann eingerichtet sein, eine Kennzeichnung, beispielsweise eine reflektierende Oberfläche, einer Positionsmarkierung zu erkennen. Er kann eingerichtet sein, nur dann zu messen, wenn diese Kennzeichnung, insbesondere die reflektierende Oberfläche, erkannt ist.

Der Bauroboter kann auch wenigstens einen odometrischen Wegmesser, insbesondere wenigstens einen Radodometriesensor, aufweisen. Messdaten des Distanzmessers können vorrangig vor odometrischen Messdaten priorisiert werden. Insbesondere, solange zwischen den odometrischen Messdaten und den Messdaten des Distanzmessers keine übermäßigen Abweichungen bestehen, lässt sich durch Nutzung der Messwerte des Distanzmessers die Systemgenauigkeit verbessern.

Die mobile Plattform kann einen Fahrplattform umfassen. Für eine hinreichende Kippsicherheit kann die mobile Plattform, insbesondere die Fahrplattform, wenigstens drei, vorzugsweise voneinander unabhängige, Antriebspunkte aufweisen. Um die mobile Plattform bewegen zu können, kann wenigstens einer, vorzugsweise wenigstens zwei, der Antriebspunkte motorisch antreibbar sein. Ein Antriebspunkt kann beispielsweise einen Propeller, ein Rad, einen Kettenantrieb und / oder ein Antriebsbein umfassen.

Die Fahrplattform kann beispielsweise ein Räderfahrwerk umfassen. Das Räderfahrwerk kann beispielsweise drei oder vier Räder aufweisen.

Die mobile Plattform kann einen Träger aufweisen. Auf dem Träger kann der Manipulator angeordnet sein.

Die mobile Plattform kann eingerichtet sein, den Manipulator relativ zu einer Vertikalen und / oder zu einer Oberflächennormalen des zu bearbeitenden Gebäudeelements zu verschwenken. Dazu kann der Träger verschwenkbar an der mobilen Plattform angeordnet sein.

Rangierbewegungen der mobilen Plattform, insbesondere der Fahrplattform, können reduziert oder vermieden werden, wenn der Manipulator verschwenkt wird, bis das Werkzeug die Arbeitsposition erreicht. Dazu kann das Werkzeug, insbesondere mit seiner Längsachse, mit einem Auftreffwinkel schräg zur Oberflächennormalen des Gebäudeelements an der Arbeitsposition ausgerichtet sein oder werden.

Durch Verschwenken des Trägers und / oder des Manipulators können auch Unebenheiten eines Untergrunds, auf dem sich der Bauroboter befindet, ausgeglichen werden.

Der Manipulator kann an seinem freien Ende eine Werkzeugmaschine aufweisen. In der Werkzeugmaschine kann das Werkzeug aufgenommen sein.

Der Manipulator kann eine Hubvorrichtung umfassen. Insbesondere kann der Manipulator als Hubvorrichtung ausgebildet sein. Die Hubvorrichtung kann längenveränderlich, insbesondere teleskopierbar, sein. Ein solcher Manipulator kann sich besonders für Arbeiten an Gebäudedecken eignen.

Der Bauroboter kann mit unterschiedlichen Arten von Werkzeugmaschinen und Werkzeugen verwendbar sein.

Beispiele von Werkzeugen können Bohrwerkzeuge, insbesondere zum Hammerbohren in Gestein, Stahlbohrwerkzeuge oder Holzbohrwerkzeuge, Meißelwerkzeuge oder Setzwerkzeuge sein. Setzwerkzeuge können beispielsweise Werkzeuge zum Setzen, insbesondere zum Setzen von Befestigungselementen wie beispielsweise Schrauben, Nägeln, Ankern oder Dübeln, sein. Denkbar ist auch, dass das Werkzeug ein Markierwerkzeug, beispielsweise eine Farbsprühdüse umfassend, ist. Auch denkbar ist, dass das Werkzeug ein Überwachungswerkzeug und / oder ein Messwerkzeug ist, beispielsweise kann es einen Distanzmesser und / oder eine Kamera umfassen.

Entsprechend den Werkzeugen kann es sich bei den Werkzeugmaschinen um Bohrmaschinen, insbesondere Bohrhämmer, Meißelmaschinen, Setzgeräte, beispielsweise Direktsetzgeräte zum Setzen von Nägeln, Schraubmaschinen wie beispielsweise Schraubern mit oder ohne Schlag, oder dergleichen handeln.

Zur Steuerung ein oder mehrerer, vorzugsweise aller, vorangehend beschriebenen Funktionalitäten des Bauroboters kann der Bauroboter einen Steuercomputer aufweisen.

Der Steuercomputer kann einen Prozessor, eine Speichereinheit und einen auf dem Prozessor ausführbaren Programmcode aufweisen. Der Prozessor kann ein oder mehrere Unterprozessoren aufweisen. Der Programmcode kann eingerichtet sein, bei Ausführung auf dem Prozessor ein oder mehrere der Funktionalitäten, insbesondere alle Funktionalitäten, durch Steuerung der entsprechenden Elemente des Bauroboters zu implementieren.

Insbesondere ist denkbar, dass der Bauroboter, insbesondere ein Programmcode eines Steuercomputers des Bauroboters, eingerichtet ist, das vorangehend beschriebene Verfahren durch Steuerung von weiteren Elementen des Bauroboters durchzuführen.

Der Bauroboter kann einen Beschleunigungs- und / oder einen Neigungssensor, beispielsweise ein Inertialmessssystem, englisch: inertial measurement unit, im Folgenden als "IMU" bezeichnet, aufweisen. Der Beschleunigungssensor und / oder der Neigungssensor können an der Fahrplattform angeordnet sein. Alternativ oder ergänzend können sie auch an der Hubvorrichtung und / oder an der Werkzeugmaschine angeordnet sein.

Der Bauroboter kann zur Ausführung von Bauarbeiten auf einer Hochbau-Baustelle und / oder einer Tiefbau-Baustelle ausgebildet sein.

Dementsprechend kann das Gebäudeelement beispielsweise eine Gebäudedecke, eine Gebäudewand und / oder einen Gebäudeboden umfassen.

Weitere Merkmale und Vorteile der Erfindung ergeben sich aus der nachfolgenden detaillierten Beschreibung von Ausführungsbeispielen der Erfindung, anhand der Figuren der Zeichnung, die erfindungswesentliche Einzelheiten zeigt, sowie aus den Ansprüchen. Die dort gezeigten Merkmale sind nicht notwendig maßstäblich zu verstehen und derart dargestellt, dass die erfindungsgemäßen Besonderheiten deutlich sichtbar gemacht werden können. Die verschiedenen Merkmale können je einzeln für sich oder zu mehreren in beliebigen Kombinationen bei Varianten der Erfindung verwirklicht sein.

In der schematischen Zeichnung sind Ausführungsbeispiele der Erfindung dargestellt und in der nachfolgenden Beschreibung näher erläutert.

**Es zeigen:**
- Fig. 1: einen Bauroboter und ein Gebäudeelement in einer perspektivischen Schrägansicht,
- Fig. 2 bis Fig. 4: den Bauroboter gemäß Fig. 1 in einer Ansicht von der Seite, in einer Ansicht von oben und in einer Ansicht von unten,
- Fig. 5: eine schematische Darstellung eines Auftreffwinkels des Bauroboters auf das Gebäudeelement,
- Fig. 6: eine schematische Darstellung eines Linienlasers, der mehrere Arbeitspositionen mithilfe eines Linienlichtstrahls markiert, wobei der Linienlichtstrahl durch den Bauroboter detektiert wird,
- Fig. 7: den von dem Linienlichtstrahl angestrahlten Bauroboter in einer Ansicht von vorne und
- Fig. 8: ein Verfahren zur Steuerung eines Bauroboters.

In der nachfolgenden Beschreibung der Figuren werden zur Erleichterung des Verständnisses für gleiche oder sich funktional entsprechende Elemente über die verschiedenen Figuren hinweg jeweils die gleichen Bezugszeichen verwendet.

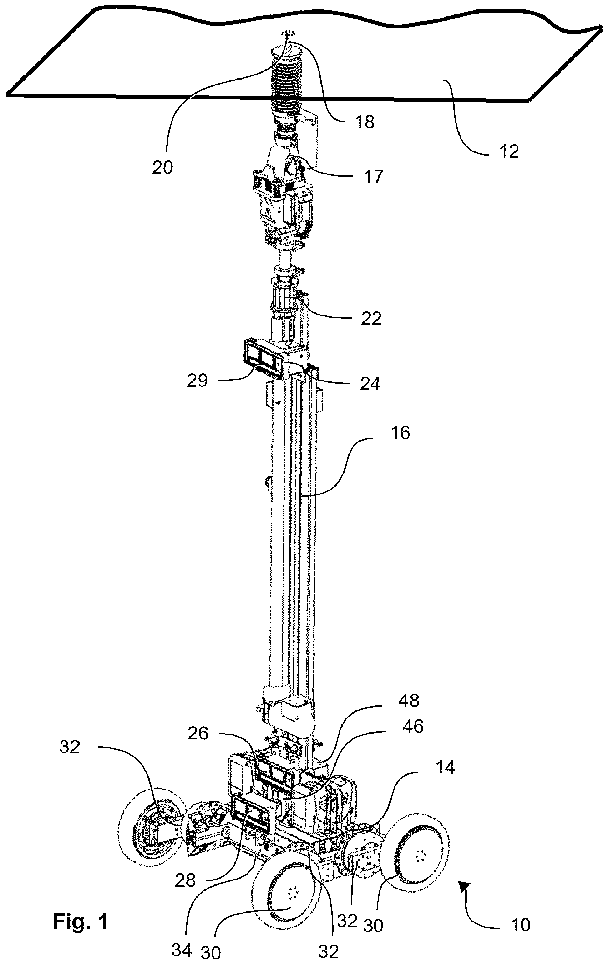

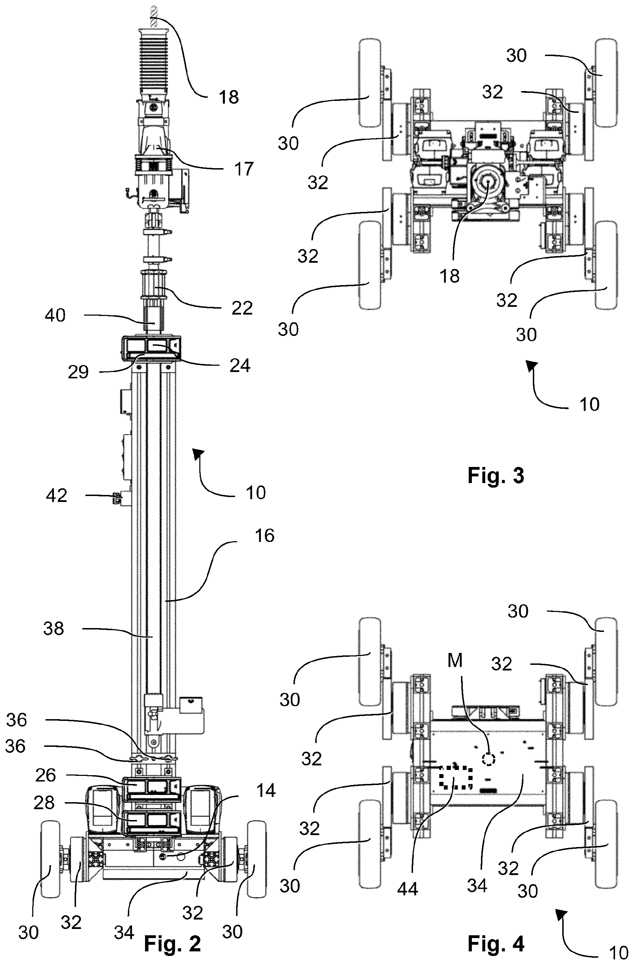

**Fig.** 1 zeigt einen Bauroboter **10** zur Bearbeitung eines Gebäudeelements 12. **Fig.** 2 zeigt eine Seitenansicht des Bauroboters 10. **Fig. 3** und **Fig. 4** zeigen eine Ansicht des Bauroboters 10 von oben beziehungsweise von unten.

Der Bauroboter 10 umfasst eine mobile Plattform in Form einer Fahrplattform 14, einen Manipulator in Form einer Hubvorrichtung **16** und eine an der Hubvorrichtung 16 angeordnete Werkzeugmaschine 17. In der Werkzeugmaschine 17 ist ein Werkzeug **18** aufgenommen. Das Werkzeug 18 kontaktiert eine Arbeitsposition **20** auf dem Gebäudeelement 12. Entlang der Hubvorrichtung 16 befinden sich ein Prisma **22** sowie ein erster Zeilenlichtsensor **24,** ein zweiter Zeilenlichtsensor **26** sowie ein dritter Zeilenlichtsensor **28**. Weiter weist der Bauroboter 10 einen Steuercomputer **46** auf. Weiter weist der Bauroboter auf einer Rückseite, insbesondere auf der den Zeilenlichtsensoren 26, 28 gegenüberliegenden Seite, einen Laserdistanzmesser **48** auf.

Die Werkzeugmaschine 17 ist als Bohrhammermaschine ausgebildet. Das Werkzeug 18 ist ein Betonbohrer.

Das Gebäudeelement 12 ist eine Gebäudedecke aus Stahlbeton.

Der Bauroboter 10 ist eingerichtet, an der Arbeitsposition 20 ein Loch in das als Gebäudedecke ausgebildete Gebäudeelement 12 zu bohren.

Die Zeilenlichtsensoren 24, 26, 28 sind eingerichtet, die Position auftreffender Lichtstrahlen oder Lichtpunkte zu detektieren. Dazu weisen sie jeweils eine lichtempfindliche Sensorzeile **29** auf. Zur Vereinfachung der Darstellung ist in Fig. 1 lediglich eine der Sensorzeilen 29 mit einem Bezugszeichen versehen. Die lichtempfindliche Sensorzeilen 29 können eine Breite von beispielsweise 10 cm aufweisen. Über die Breite der Sensorzeilen 29 erstrecken sich jeweils Matrizen aus lichtempfindlichen Einzelsensoren.

Der erste Zeilenlichtsensor 24 und der zweite Zeilenlichtsensor 26 sind vertikal versetzt übereinander angeordnet. Der dritte Zeilenlichtsensor 28 ist schräg nach vorne unterhalb des zweiten Zeilenlichtsensors 26 angeordnet.

Das Prisma 22 kann, insbesondere in Verbindung mit einer Totalstation, alternativ oder ergänzend verwendet werden, um eine Position und / oder Lage des Bauroboters 10 und insbesondere des Werkzeugs 18 zu ermitteln.

Die Fahrplattform 14 weist vier Antriebspunkte **30** auf, von denen aus Darstellungsgründen in Fig. 1 lediglich drei Antriebspunkte 30 zu erkennen sind. Die Antriebspunkte 30 weisen Räder auf. Die Räder sind direktionale Räder. Es ist nicht notwendig, jedoch denkbar, dass die Räder omnidirektionale Räder sind.

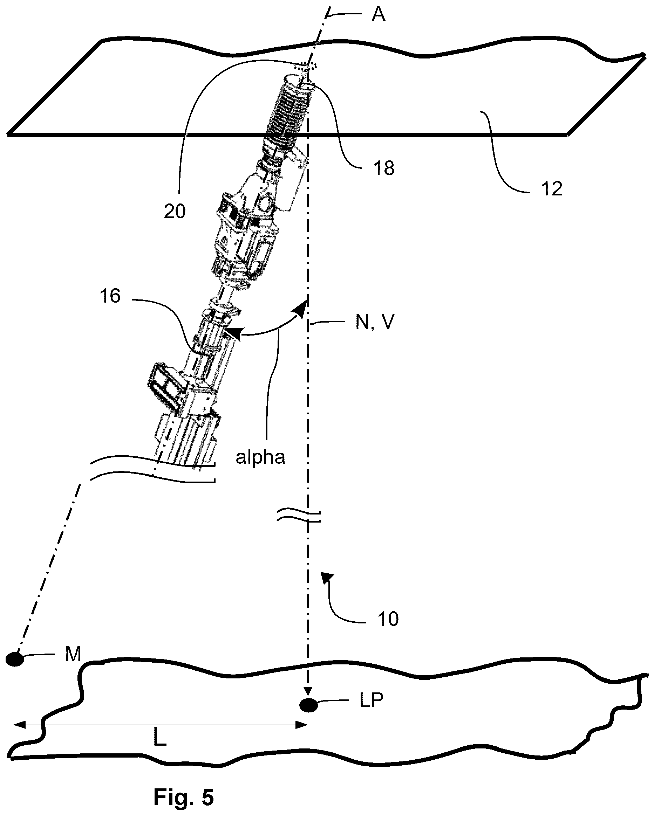

Jeder der Antriebspunkte 30 weist eine Höhenverstellung **32** auf. Die Höhenverstellungen 32 greifen an einem Träger **34** an. Auf dem Träger 34 ist die Hubvorrichtung 16 angeordnet. Mit Hilfe der Höhenvorstellungen 32 lässt sich somit der Träger 34 verschwenken. Durch Verschwenken des Trägers 34 lassen sich somit auch die Hubvorrichtung 16 und die an ihr angeschlossenen Werkzeugmaschine 17 und damit das Werkzeug 18 verschwenken. Wie noch weiter unten im Zusammenhang mit Fig. 5 näher erläutert werden wird, kann der Bauroboter 10 somit mithilfe der Höhenvorstellungen 32 der Fahrplattform 14 die Hubvorrichtung 16 und damit die Werkzeugmaschine 17 mit ihrem Werkzeug 18 relativ zu einer Oberflächennormalen des Gebäudeelements 12 verschwenken.

Die Höhenverstellungen 32 sind selbsttätig blockierend ausgebildet. Dazu können sie beispielsweise ein Schneckengetriebe aufweisen. Somit verstellen sich die Höhenvorstellungen 32 und damit ein Neigungswinkel der Fahrplattform 14 nur dann, wenn die Schneckengetriebe, beispielsweise mithilfe eines Stellmotors, bewegt werden.

Die Hubvorrichtung 16 weist einen einzigen Freiheitsgrad auf. Insbesondere ist sie längenveränderlich. Wie insbesondere aus Fig. 2 erkennbar, lässt sich mit Fixierhebeln **36** ein unterer Teil **38** der Hubvorrichtung 16 lösen, manuell entlang der übrigen Hubvorrichtung 16 verschieben und anschließend wieder an der übrigen Hubvorrichtung 16 fixieren. Somit lässt sich der Bauroboter 10 zunächst manuell grob auf eine erste Länge beziehungsweise Höhe einstellen, von der aus der Bauroboter 10 selbsttätig einen oberen Teil **40** der Hubvorrichtung 16 je nach Bedarf, insbesondere elektrisch angetrieben, so weit ausfahren kann, dass das Werkzeug 18 die Arbeitsposition 20 erreicht oder gegebenenfalls an dieser in das Gebäudeelement 12 eindringt.

Insgesamt ist der Bauroboter 10 derart dimensioniert, dass sein Gesamtgewicht unter 50 kg beträgt. Ist, wie beispielsweise in Fig. 1 und Fig. 2 dargestellt, der Bauroboter 10 bis zu einer minimalen Länge eingefahren, so weist er eine Höhe von beispielsweise weniger als 1,5 m auf. Die Fahrplattform 14 nimmt eine Grundfläche von weniger als 60 x 60 cm ein. Auch dadurch ist der Bauroboter 10 problemlos von einem Bauarbeiter tragbar und lässt sich innerhalb üblicher Gebäude beispielsweise von einem Raum in einen anderen transportieren.

Der Bauroboter 10 weist ferner einen Betriebsmoduswahlschalter **42** (siehe insbesondere Fig. 2) auf. Der Betriebsmoduswahlschalter 42 ermöglicht es, den Bauroboter 10 in einem ersten Betriebsmodus zu betreiben, indem dieser selbsttätig die Arbeitsposition 20 mit seinem Werkzeug 18 anfährt. In einem zweiten Betriebsmodus lässt sich der Bauroboter 10 mittels Handführung steuern. Insbesondere lässt sich in dem zweiten Betriebsmodus die Hubvorrichtung 16 durch entsprechenden gerichteten Druck manuell in eine gewünschte Richtung verschwenken.

In Fig. 4 ist schematisch eine IMU **44** abgebildet. Die IMU 44 befindet sich auf dem Träger 34 und ist daher in der Ansicht des Bauroboters 10 von unten in Fig. 4 nicht sichtbar.

Ferner zeigt Fig. 4 einen Mittelpunkt M des Trägers 34.

Der Bauroboter 10 ist eingerichtet, mit Hilfe der IMU 44 Beschleunigungen und Neigungswinkel des Trägers 34 gegen die Horizontale zu messen. Somit lassen sich beispielsweise Unebenheiten des Untergrundes mit Hilfe der IMU 44 detektieren. Der Bauroboter 10 ist ferner eingerichtet, mit Hilfe der Höhenverstellungen 32 derartige Neigungswinkel und / oder Unebenheiten, insbesondere während einer Bewegung der Fahrplattform 14, zu kompensieren, sodass der Bauroboter 10 durchgängig gegen Umstürzen gesichert ist.

Anhand von **Fig. 5** soll näher erläutert werden, wie das Werkzeug 18 mit seiner Längsachse **A** unter einem Auftreffwinkel **alpha** schräg zu einer Oberflächennormalen N des zu bearbeitenden Gebäudeelements 12 ausgerichtet wird.

Dazu zeigt **Fig. 5** vereinfachend einen Teil der Hubvorrichtung 16. Insbesondere zeigt Fig. 5, dass das Werkzeug 18 an der Arbeitsposition 20 das Gebäudeelement 12 schräg kontaktiert.

Somit ergibt sich der, insbesondere von Null verschiedene, Auftreffwinkel alpha zwischen der Längsachse A des Werkzeugs 18 und der Oberflächennormalen N durch die Arbeitsposition 20.

Da in diesem Fall das Gebäudeelement 12 entsprechend einer Gebäudedecke horizontal verläuft, verläuft in dem dargestellten Ausführungsbeispiel die Oberflächennormale N auch parallel zu einer Vertikalen V.

Dabei ist aus Darstellungsgründen der Auftreffwinkel alpha in Fig. 5 erheblich überzeichnet. Bei einem tatsächlichen Anwendungsfall kann der Auftreffwinkel alpha weniger als 10°, insbesondere weniger als 5°, besonders bevorzugt weniger als 1°, sowie beispielsweise mehr als 0,1°, betragen.

Zu erkennen ist, dass durch die Schrägstellung des Werkzeugs 18 entsprechend dem Auftreffwinkel alpha der Mittelpunkt M des Trägers 34 (siehe Fig. 2) um eine Distanz L horizontal beabstandet von einem Lotpunkt **LP,** der sich aus dem auf den Untergrund gefällten Lot der Arbeitsposition 20 ergibt, ist. Damit ist der Mittelpunkt M ebenfalls um die Distanz L horizontal beabstandet von der Arbeitsposition 20.

Somit ist der Bauroboter 10 eingerichtet, eine Bauarbeit, hier Bohren eines Loches, an der Arbeitsposition 20 zu verrichten, selbst wenn sich die Fahrplattform 14, insbesondere der Mittelpunkt M, nicht vertikal unterhalb der Arbeitsposition 20 befindet. Somit bleibt es erspart, dass die Fahrplattform 14 entsprechend rangiert wird, um den Mittelpunkt M vertikal unter die Arbeitsposition 20 zu bringen. Es ist erkennbar, dass damit auch Arbeitspositionen 20 erreichbar werden, die sonst mangels freien Raums für die Fahrplattform 14 sonst nicht erreichbar wären. Insbesondere Randbereiche des Gebäudeelemente 12 können dadurch überhaupt oder zumindest einfacher erreichbar sein.

Im zweiten Betriebsmodus, also dem manuellen Betriebsmodus, ist der Auftreffwinkel durch Handführung der Hubvorrichtung 16 einstellbar. Insbesondere lässt sich die Hubvorrichtung 16 durch Druck auf diese verschwenken. Dabei ist der Bauroboter 10 eingerichtet, eine maximal erlaubte Auslenkung und damit den maximal erreichbaren Auftreffwinkel alpha so weit zu begrenzen, dass der Bauroboter 10 auch in diesem Betriebsmodus zu keinem Zeitpunkt umstürzen kann.

In beiden Betriebsmodi ist der Bauroboter 10 eingerichtet, die jeweils erreichte Neigung der Hubvorrichtung 16 und damit des Auftreffwinkels alpha durch Nachführen der Höhenverstellungen 32 einzustellen beziehungsweise abzustützen. Im zweiten Betriebsmodus führt dies beispielsweise dazu, dass eine manuell eingestellte Neigung der Hubvorrichtung 16 nach Loslassen der Hubvorrichtung 16 erhalten bleibt. Somit kann der Benutzer durch Ausfahren der Hubvorrichtung 16, beispielsweise gesteuert über eine nicht abgebildete Fernsteuerung, die Arbeitsposition 20 mit dem Werkzeug 18 anfahren.

Mit Hilfe der drei Zeilenlichtsensoren 24, 26, 28 kann der Verlauf eines die Arbeitsposition 20 markierenden Linienlichtstrahls, beispielsweise ein entsprechend ausgerichteter Laserstrahl, detektiert werden. Aus dem detektierten Verlauf des Linienlichtstrahls kann auf die Position der Arbeitsposition 20 geschlossen werden. Ist beispielsweise bekannt, dass der Linienlichtstrahl exakt vertikal ausgerichtet ist, kann mit Hilfe der drei Zeilenlichtsensoren 24, 26, 28 alternativ oder ergänzend ein Neigungswinkel der Hubvorrichtung 16 ermittelt werden.

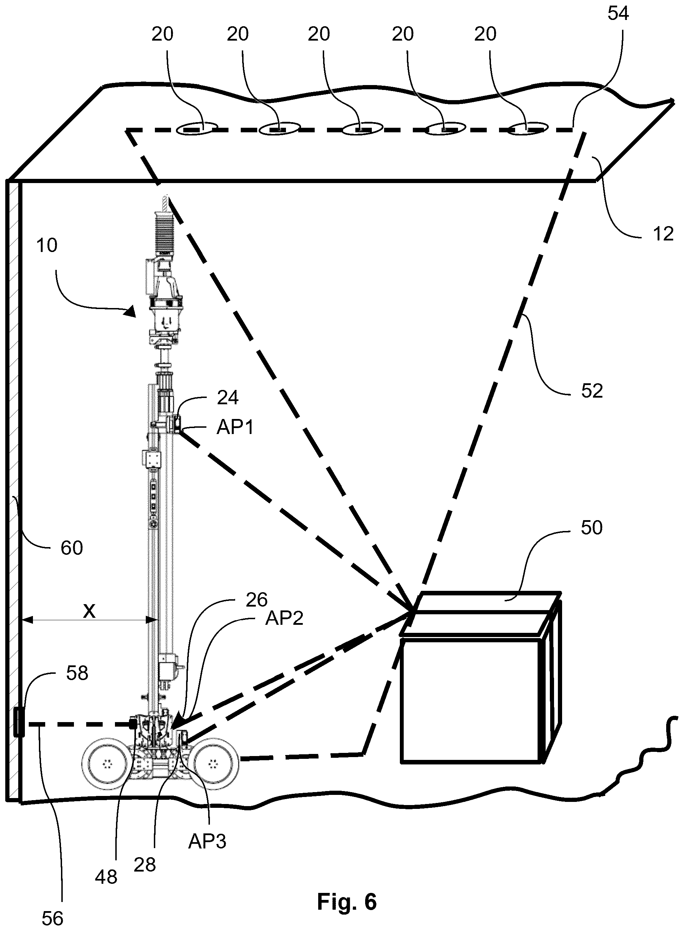

Dazu zeigt Fig. 6 eine schematische Darstellung eines Linienlasers **50,** der die Lage mehrerer, voneinander mit einem vordefinierten, konstanten Abstand beabstandeten Arbeitspositionen 20 auf dem Gebäudeelement 12 mithilfe eines Linienlichtstrahls **52** markiert. Der Linienlaser 50 ist ein Dauerlichtlaser. Der Linienlichtstrahl 52 wird mit einem Abstrahlwinkel von beispielsweise 180° vom Linienlaser 50 abgestrahlt. Er markiert somit eine durchgehende Linie **54** entlang des Gebäudeelements 12.

An drei Auftreffpunkten **AP1, AP2** und **AP3** trifft der Linienlichtstrahl 52 auf die Zeilenlichtsensoren 24, 26, 28 und insbesondere auf deren jeweiligen Sensorzeilen 29 (siehe Fig. 1).

Mit seinem Laserdistanzmesser 48 misst der Bauroboter 10 mithilfe eines Messstrahls **56** eine zweite Koordinate **x** zu einer Positionsmarkierung **58**. Die Positionsmarkierung 58 ist dazu als Reflektor ausgebildet. Sie ist an einer Wand **60** fixiert.

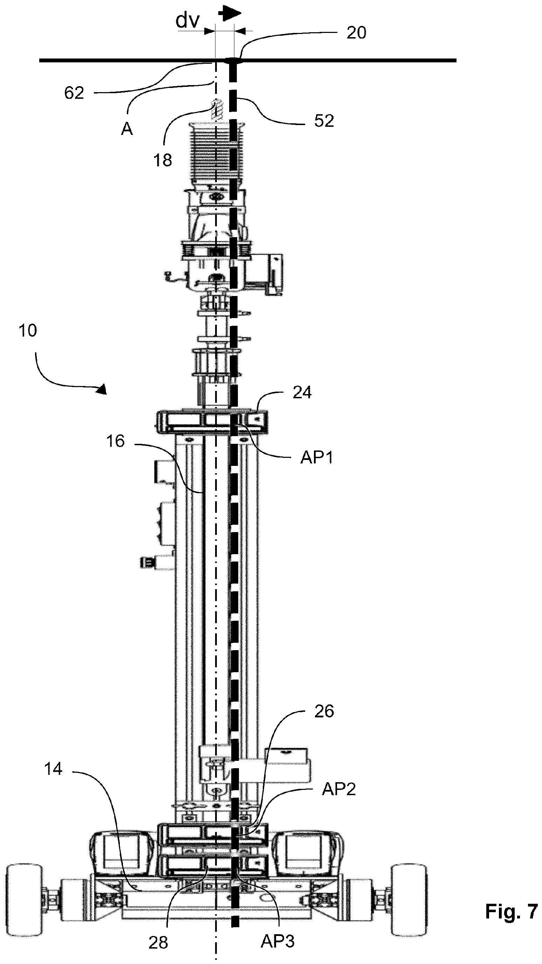

**Fig. 7** zeigt den Bauroboter 10 in der Situation gemäß Fig. 6 in einer Ansicht von vorne.

Zu erkennen ist, dass der Linienlichtstrahl 52 um eine Versatzdistanz **dv** versetzt zur Längsachse A des Werkzeugs 18 verläuft. Somit ist das Werkzeug 18 auf einen von der Arbeitspunkt 20 beabstandeten Zielpunkt **62** auf dem Gebäudeelement 12 ausgerichtet.

Der Linienlichtstrahl 52 trifft an Auftreffpunkten AP1, AP2, AP3 auf die Zeilenlichtsensoren 24, 26 und 28.

Im in Fig. 7 gezeigten Beispiel ist die Hubvorrichtung 16 vertikal ausgerichtet, sodass die Längsachse A parallel zum ebenfalls vertikal ausgerichteten Linienlichtstrahl 52 verläuft.

Daher entsprechen die Abstände der Auftreffpunkte AP1, AP2 und AP3 von der Längsachse A in diesem Beispiel der Versatzdistanz dv. Bei einem nichtparallelen Verlauf des Linienlichtstrahls 52 zur Längsachse A würden sich unterschiedliche Abstände auf den einzelnen Zeilenlichtsensoren 24, 26, 28 ergeben, sodass aus diesen Unterschieden auf eine Neigung der Längsachse relativ zum Linienlichtstrahl 52 geschlossen werden kann.

Der Bauroboter 10 misst diese Abstände der Auftreffpunkte AP1, AP2 und AP3 von der Längsachse A und bestimmt daraus die Versatzsatzdistanz dv. Aus dieser bestimmt der Bauroboter 10 anschließend den Auftreffwinkel alpha, (siehe Fig. 5) entsprechend welchem die Hubvorrichtung 16 und damit das Werkzeug 18 entlang der in Fig. 7 mit einem Pfeil markierten Richtung zu verschwenken ist, damit das Werkzeug 18 die Arbeitsposition 20 anfahren kann.

Wie im Zusammenhang mit Fig. 5 beschrieben, verschwenkt der Bauroboter 10 dann die Hubvorrichtung 16, um den bestimmten Auftreffwinkel alpha, um die Versatzdistanz dv zu kompensieren und das Werkzeug 18 auf den Auftreffpunkt des Linienlichtstrahls 52 auf dem Gebäudeelement 12 und damit auf eine der Arbeitspositionen 20 auszurichten.

Um die Position des Werkzeugs 18 entlang der Linie 54 festzustellen, kann die zweite Koordinate x herangezogen werden.

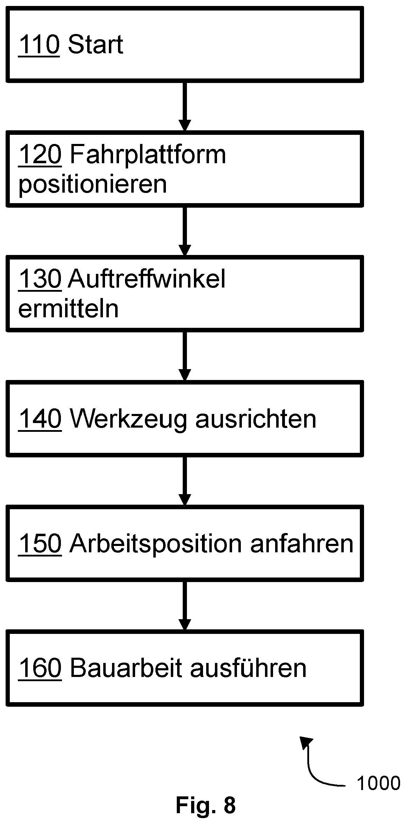

**Fig. 8** zeigt ein Verfahren **1000** zur Steuerung eines Bauroboters.

Zur Erläuterung des Verfahrens 1000 wird auf die vorangehend beschriebenen Figuren 1 bis 7 sowie die dort eingeführten Bezugszeichen Bezug genommen.

Das Verfahren 1000 wird ebenfalls am Beispiel des Bohrens von Löchern an den Arbeitspositionen 20 des Gebäudeelements 12 mit Hilfe eines Bauroboters, beispielsweise dem Bauroboter 10, dargestellt.

In einer Startphase **110** bewegt sich der Bauroboter 10 mithilfe seiner Fahrplattform 14 in den Strahlengang des Linienlichtstrahls 52, sodass der Linienlichtstrahl auf die Zeilenlichtsensoren 24, 26, 28 an den Auftreffpunkten AP1, AP2, AP3 auftrifft. Er rangiert die Fahrplattform 14, bis der Laserdistanzmesser 48 mit seinem Messstrahl 56 die Positionsmarkierung 58 erfasst und erkennt.

In einer Phase **120** fährt die Fahrplattform 14 so weit entlang des Linienlichtstrahl 52, bis die zweite Koordinate x der nächsten zu bearbeitenden Arbeitsposition 20 entspricht. Die Bewegung der Fahrplattform 14 erfolgt bei laufender Kontrolle der Auftreffpunkte AP1, AP2, AP3 und gegebenenfalls entsprechender Korrekturbewegungen, so dass der Linienlichtstrahl 52 nicht von den Sensorzeilen 29 abdriftet.

Wie im Zusammenhang mit Fig. 7 beschrieben, ermittelt der Bauroboter 10 in einer Phase **130** die Versatzdistanz dv sowie daraus den erforderlichen Auftreffwinkel alpha.

Anschließend verschwenkt der Bauroboter 10 in einer Phase **140** seine Hubvorrichtung 16 entsprechend dem ermittelten Auftreffwinkel alpha, um das Werkzeug 18 auf die nächste zu bearbeitende Arbeitsposition 20 auszurichten wie im Zusammenhang mit Fig. 5 beschrieben. Somit bewegt der Bauroboter 10 das Werkzeug 18 in Abhängigkeit von den Positionen der Auftreffpunkt AP1, AP2 und AP3 des Linienlichtstrahls 52 auf dem Bauroboter 10. Insbesondere bewegt der Bauroboter 10 damit das Werkzeug 18 in Abhängigkeit der Abstände der Auftreffpunkte AP1, AP2, AP3 von der Längsachse A.

Sodann fährt der Bauroboter 10 in einer Phase **150** die Hubvorrichtung 16 aus, um mit dem Werkzeug 18 diese Arbeitsposition 20 anzufahren.

Sobald das Werkzeug 18 diese nächste zu bearbeitende Arbeitsposition 20 erreicht hat, führt er in einer Phase **160** die gewünschte Bauarbeit aus.

Gemäß dem hier zugrunde gelegten Beispiel wird insbesondere die Werkzeugmaschine 17 aktiviert, so dass das Werkzeug 18 beginnt, an der Arbeitsposition 20 ein Loch zu bohren. Zum Bohren wird die Hubvorrichtung 16 dem Bohrfortschritt entsprechend nachgeführt.

Sobald das Werkzeug 18 das Loch mit der gewünschten Tiefe gebohrt hat, wird die Hubvorrichtung 16 wieder zumindest teilweise eingefahren, um das Werkzeug 18 aus dem Loch herauszuziehen.

Anschließend wird die Werkzeugmaschine 17 deaktiviert.

Sofern noch weitere zu bearbeitende Arbeitspositionen 20 verbleiben, kann das Verfahren 1000 bei Phase 120, also dem Erfassen der Relativposition, beginnend in abgekürzter Weise wiederholt werden.

Sind alle Bauarbeiten an allen zu bearbeitenden Arbeitspositionen 20 ausgeführt, kann das Verfahren 1000 beendet werden.

### Bezugszeichenliste

- 10: Bauroboter
- 12: Gebäudeelement
- 14: Fahrplattform
- 16: Hubvorrichtung
- 17: Werkzeugmaschine
- 18: Werkzeug
- 20: Arbeitsposition
- 22: Prisma
- 24: Zeilenlichtsensor
- 26: Zeilenlichtsensor
- 28: Zeilenlichtsensor
- 29: Sensorzeile
- 30: Antriebspunkt
- 32: Höhenverstellung
- 34: Träger
- 36: Fixierhebel
- 38: unterer Teil
- 40: oberer Teil
- 42: Betriebsmoduswahlschalter
- 44: IMU
- 46: Steuercomputer
- 48: Laserdistanzmesser
- 50: Linienlaser
- 52: Linienlichtstrahl
- 54: Linie
- 56: Messstrahl
- 58: Positionsmarkierung
- 60: Wand
- 62: Zielpunkt
- 110: Startphase
- 120: Phase
- 130: Phase
- 140: Phase
- 150: Phase
- 160: Phase
- 1000: Verfahren
- A: Längsachse
- AP1: Auftreffpunkt
- AP2: Auftreffpunkt
- AP3: Auftreffpunkt
- L: Distanz
- LP: Lotpunkt
- M: Mittelpunkt
- N: Oberflächennormale
- V: Vertikale
- alpha: Auftreffwinkel
- dv: Versatzdistanz
- x: Zweite Koordinate

## Patentansprüche

1. **Verfahren (1000) zur Steuerung eines Bauroboters (10),** wobei der Bauroboter (10) gesteuert wird, mit einem an einem Manipulator des Bauroboters (10) befindlichen Werkzeug (18) zumindest eine Arbeitsposition (20) auf einem Gebäudeelement (12) anzufahren, wobei die Arbeitsposition (20) mit Hilfe wenigstens eines Linienlichtstrahls (52) markiert wird,
**dadurch gekennzeichnet,**
**dass** der Bauroboter (10) den Manipulator und / oder das Werkzeug (18) in Abhängigkeit von einer Position eines Auftreffpunkts (AP1, AP2, AP3) des Linienlichtstrahls (52) auf dem Bauroboter (10) bewegt.

2. Verfahren (1000) nach dem vorhergehenden Anspruch, **dadurch gekennzeichnet, dass** die Position des Auftreffpunkts (AP1, AP2, AP3) mit Hilfe wenigstens eines Zeilenlichtsensors (24, 26, 28) oder eines Flächenlichtsensors bestimmt wird.

3. Verfahren (1000) nach einem der beiden vorhergehenden Ansprüche, **dadurch gekennzeichnet, dass** wenigstens zwei Positionen zweier verschiedener Auftreffpunkte (AP1, AP2, AP3) des Linienlichtstrahls (52) auf dem Bauroboter (10) detektiert werden.

4. Verfahren (1000) nach einem der vorhergehenden Ansprüche, **dadurch gekennzeichnet, dass** wenigstens eine Position eines Auftreffpunkts (AP1, AP2, AP3) auf dem Manipulator detektiert wird.

5. Verfahren (1000) nach einem der vorhergehenden Ansprüche, **dadurch gekennzeichnet, dass** zusätzlich wenigstens eine zweite Koordinate (x), beispielsweise eine Distanz zu dem Gebäudeelement (12) und / oder zu einem zweiten Gebäudeelement (12), gemessen wird.

6. Verfahren (1000) nach einem der vorhergehenden Ansprüche, **dadurch gekennzeichnet, dass** der Manipulator des Bauroboters (10) abhängig von Positionen von wenigstens zwei der Auftreffpunkte (AP1, AP2, AP3) verschwenkt wird.

7. Verfahren (1000) nach einem der vorhergehenden Ansprüche, **dadurch gekennzeichnet, dass** der Manipulator abhängig von Positionen von wenigstens zwei der Auftreffpunkte (AP1, AP2, AP3) relativ zu einer Vertikalen (V) und / oder relativ zu einer in der Arbeitsposition (20) fußenden Oberflächennormalen (N) des Gebäudeelements (12) schräg gestellt wird.

8. **Bauroboter (10)** umfassend eine mobile Plattform, beispielsweise eine Fahrplattform (14), einen Manipulator, beispielsweise eine Hubvorrichtung (16), an dem ein Werkzeug (18) anordenbar und / oder angeordnet ist, sowie wenigstens einen Lichtsensor, wobei der Bauroboter (10) eingerichtet ist, eine Position eines Auftreffpunktes (AP1, AP2, AP3) eines Linienlichtstrahls (52) auf dem Bauroboter (10) mit Hilfe des Lichtsensors zu bestimmen.

9. Bauroboter (10) nach dem vorhergehenden Anspruch, **dadurch gekennzeichnet, dass** der Bauroboter (10) eingerichtet ist, Positionen wenigstens zweier verschiedener Auftreffpunkte (AP1, AP2, AP3) des Linienlichtstrahls (52) auf dem Bauroboter (10) zu bestimmen.

10. Bauroboter (10) nach einem der beiden vorhergehenden Ansprüche, **dadurch gekennzeichnet, dass** der Bauroboter (10) wenigstens insgesamt wenigstens zwei, insbesondere drei Zeilenlichtsensoren (24, 26, 28) und / oder Flächenlichtsensoren aufweist.
